# EUROPEAN PATENT APPLICATION

(11) **EP 4 064 159 A1**
(43) Date of publication of application: **28.09.2022**
(21) Application number: 21194344.4
(22) Date of filing: 01.09.2021
(51) Int. Cl.: G06Q 10/10

(54) **INFORMATION PROCESSING APPARATUS, INFORMATION PROCESSING PROGRAM, AND INFORMATION PROCESSING METHOD**

(30) Priority: 26.03.2021 JP 2021054121
(71) Applicant: FUJIFILM Business Innovation Corp., Minato-ku Tokyo (JP)
(72) Inventor: KOBAYASHI, Kunihiko, Yokohama-shi (JP); YAMAGUCHI, Masayuki, Yokohama-shi (JP); SUZUKI, Yusuke, Yokohama-shi (JP); UENO, Kunikazu, Yokohama-shi (JP); YAMAGUCHI, Akinobu, Yokohama-shi (JP)
(74) Representative: Becker, Eberhard

(57) **Abstract**

An information processing apparatus includes a processor configured to acquire text string information corresponding to a predetermined item in a digitized form and position information of the text string information, put the acquired text string information into an unrecognizable state in a display of the form by using the acquired position information for the item, and change the unrecognizable state to a recognizable state by performing a predetermined operation on the item.

## Description

### BACKGROUND OF THE INVENTION

### (i) Field of the Invention

The present disclosure relates to an information processing apparatus, an information processing program, and an information processing method.

### (ii) Description of Related Art

JP2012-150707A discloses an approval support program. The approval support program causes a display device to display an electronic document associated with the approval information including information for identifying an approver, and acquires position information on the electronic document specified by an operator. In a case where the position information is included in an input range of the approval information on the electronic document, the approval support program acquires organization information from a storage unit, and causes the display device to display the acquired organization information in a display form in which the approver and a person other than the approver are visually different. Based on information for identifying an approver, the storage unit stores the information for identifying an approver and organization information including an approver and a person other than the approver who belongs to the same organization as the approver in association with each other.

### SUMMARY OF THE INVENTION

As a system for approving a form, for example, there is a system that displays the contents of the entire form and enables approval by an approver based on the displayed contents. However, in a case of confirming the display of the entire form by looking at the form uniformly, items to be confirmed may be overlooked.

An object of the present disclosure is to provide an information processing apparatus, an information processing program, and an information processing method capable of recognizing the presence of a predetermined item in a form.

According to a first aspect of the present disclosure, there is provided an information processing apparatus including a processor configured to acquire text string information corresponding to a predetermined item in a digitized form and position information of the text string information, put the acquired text string information into an unrecognizable state in a display of the form by using the acquired position information for the item, and change the unrecognizable state to a recognizable state by performing a predetermined operation on the item.

An information processing apparatus according to a second aspect of the present disclosure is the information processing apparatus according to the first aspect of the present disclosure, in which the processor may be configured to display change information indicating whether or not the item has been changed from the unrecognizable state to the recognizable state.

An information processing apparatus according to a third aspect of the present disclosure is the information processing apparatus according to the second aspect of the present disclosure, in which the processor may be configured to display, as the change information, the number of the items in the unrecognizable state and the number of the items changed to the recognizable state in a predetermined area.

An information processing apparatus according to a fourth aspect of the present disclosure is the information processing apparatus according to the second aspect of the present disclosure, in which the processor may be configured to display, as the change information, a confirmation status display section for each item that changes in a case where the unrecognizable state is changed to the recognizable state in a predetermined area.

An information processing apparatus according to a fifth aspect of the present disclosure is the information processing apparatus according to any one of the first to fourth aspects of the present disclosure, in which the processor may be configured to, in a case where there are a plurality of the items in the unrecognizable state, display completion information for all of the items in a case where the unrecognizable state becomes the recognizable state due to the change.

An information processing apparatus according to a sixth aspect of the present disclosure is the information processing apparatus according to the fifth aspect of the present disclosure, in which the processor may be configured to prohibit approval of the form in a case where the completion information is not displayed, and permit approval of the form in a case where the completion information is displayed.

An information processing apparatus according to a seventh aspect of the present disclosure is the information processing apparatus according to any one of the first to sixth aspects of the present disclosure, in which the processor may be configured to put the item into the unrecognizable state by superimposing a mask image, which is generated in a display range indicated by the acquired position information, on the form, and change the unrecognizable state to the recognizable state by removing the mask image in response to an operation of selecting the mask image for the item in the unrecognizable state.

An information processing apparatus according to an eighth aspect of the present disclosure is the information processing apparatus according to any one of the first to seventh aspects of the present disclosure, in which the processor may be configured to, in a case where criteria set for each item are satisfied, acquire the text string information for the item and put the acquired text string information into the unrecognizable state.

An information processing apparatus according to a ninth aspect of the present disclosure is the information processing apparatus according to the eighth aspect of the present disclosure, in which the processor may be configured to, in a case where there are a plurality of the items for which the text string information has been acquired by satisfying the criteria, determine the item to be in the unrecognizable state among the items satisfying the criteria in accordance with a predetermined rule.

According to a tenth aspect of the present disclosure, there is provided an information processing program causing a computer to execute a process including acquiring text string information corresponding to a predetermined item in a digitized form and position information of the text string information, putting the acquired text string information into an unrecognizable state in a display of the form by using the acquired position information for the item, and changing the unrecognizable state to a recognizable state by performing a predetermined operation on the item.

According to an eleventh aspect of the present disclosure, there is provided an information processing method including acquiring text string information corresponding to a predetermined item in a digitized form and position information of the text string information, putting the acquired text string information into an unrecognizable state in a display of the form by using the acquired position information for the item, and changing the unrecognizable state to a recognizable state by performing a predetermined operation on the item.

According to the first aspect, the tenth aspect, and the eleventh aspect of the present disclosure, the presence of a predetermined item can be recognized in the form.

According to the second aspect of the present disclosure, the change in the state of the item can be visualized.

According to the third aspect of the present disclosure, the remaining number of unrecognizable items can be visualized.

According to the fourth aspect of the present disclosure, the changed item can be visualized.

According to the fifth aspect of the present disclosure, the completion of the change of the unrecognizable item in the form can be visualized.

According to the sixth aspect of the present disclosure, the approval of the form can be suppressed until all the unrecognizable items are changed.

According to the seventh aspect of the present disclosure, the state of the item can be changed by the operation on the mask image.

According to the eighth aspect of the present disclosure, it is possible to control the criteria for making each item unrecognizable.

According to the ninth aspect of the present disclosure, it is possible to control the item to be made unrecognizable in accordance with the rule.

### BRIEF DESCRIPTION OF THE DRAWINGS

Exemplary embodiment(s) of the present invention will be described in detail based on the following figures, wherein:
Fig. 1 is a schematic diagram of a mechanism for requesting confirmation of general display contents;
Fig. 2 is a schematic diagram of a mechanism for superimposing mask images of an exemplary embodiment;
Fig. 3 is a block diagram showing a hardware configuration of an information processing apparatus according to this exemplary embodiment;
Fig. 4 is a diagram showing an example of criteria for each item of this exemplary embodiment;
Fig. 5 is a block diagram showing an example of a functional configuration of the information processing apparatus according to this exemplary embodiment;
Fig. 6 is a diagram showing an example of position information of this exemplary embodiment;
Fig. 7 is a schematic diagram of a mode in which a mask image of a processed form is removed in a case where a mask image is clicked by a user operation of this exemplary embodiment;
Fig. 8 is a flowchart showing a flow of a target item determination process by the information processing apparatus according to this exemplary embodiment;
Fig. 9 is a flowchart showing a flow of a form mask process by the information processing apparatus according to this exemplary embodiment;
Fig. 10 is a flowchart showing a flow of a form control process by the information processing apparatus according to this exemplary embodiment;
Fig. 11 is a diagram showing a display example in a case where the number of items is displayed as change information of this exemplary embodiment;
Fig. 12 is a diagram showing a display example in a case where a check box is displayed as change information of this exemplary embodiment; and
Fig. 13 is a diagram showing a display example in a case where completion information of this exemplary embodiment is displayed.

### DETAILED DESCRIPTION OF THE INVENTION

Hereinafter, an example of an exemplary embodiment of the present disclosure will be described with reference to the drawings. The same reference signs are given to the same or equivalent components and parts in each drawing. In addition, the dimensional ratios in the drawings are exaggerated for convenience of description and may differ from the actual ratios.

First, the outline of the premise of this exemplary embodiment will be described. As shown in the above problem, there is a problem regarding the approval of forms. In a form process until the form is approved, the general flow is that a drafter creates the form, and an approver approves the form and stamps a seal. In the case of an electronic form, it is common to stamp an electronic seal. In such a form process, there are cases where an approver cannot confirm accurately, such as a case of approving a large number of types of forms and a case where the delivery date of the approval process is short.

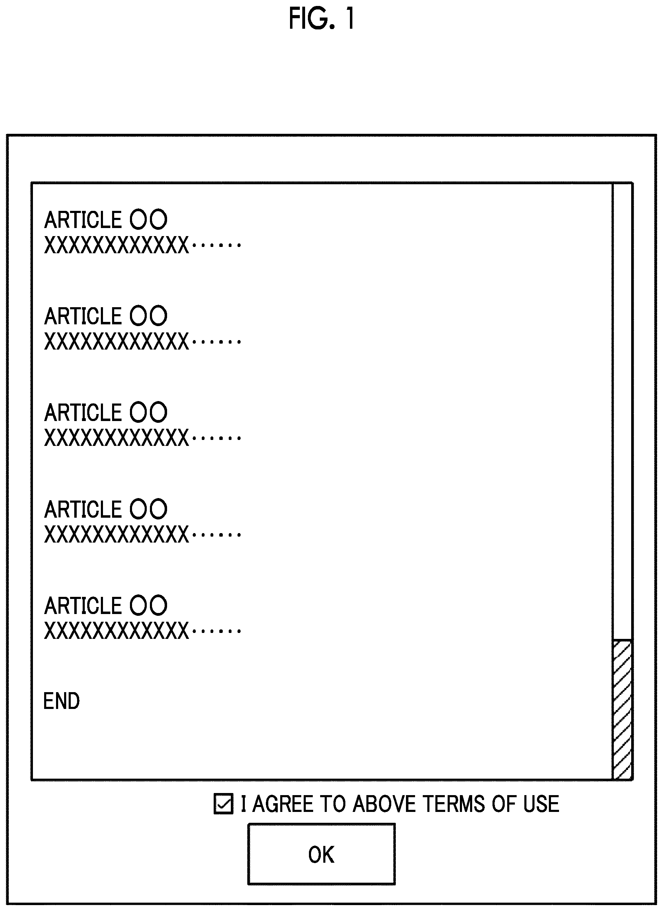

In response to such a problem, as a mechanism for accurately confirming the contents of the form, there is a mechanism for requesting confirmation of the display contents as employed in the manuals such as contracts. Fig. 1 is a schematic diagram of a mechanism for requesting confirmation of general display contents. In this mechanism, in a case where a screen is scrolled and the contents are confirmed, a check box can be checked, and in a case where the contents are not confirmed, the next step cannot be proceeded. However, in this mechanism, there is a problem that the screen may be scrolled without confirming the content, and it is difficult to determine whether or not a user has understood the content.

Under such circumstances, the inventor of the technology of the present disclosure has found, while it takes time to confirm all the items on the form, a need to have crucial items confirmed on the spot. Therefore, in this exemplary embodiment, a mechanism is proposed in which target items are listed according to criteria of the items and a text string corresponding to the target item is put into an unrecognizable state. The target item is controlled so that the content is not confirmed unless the user takes some action on the item.

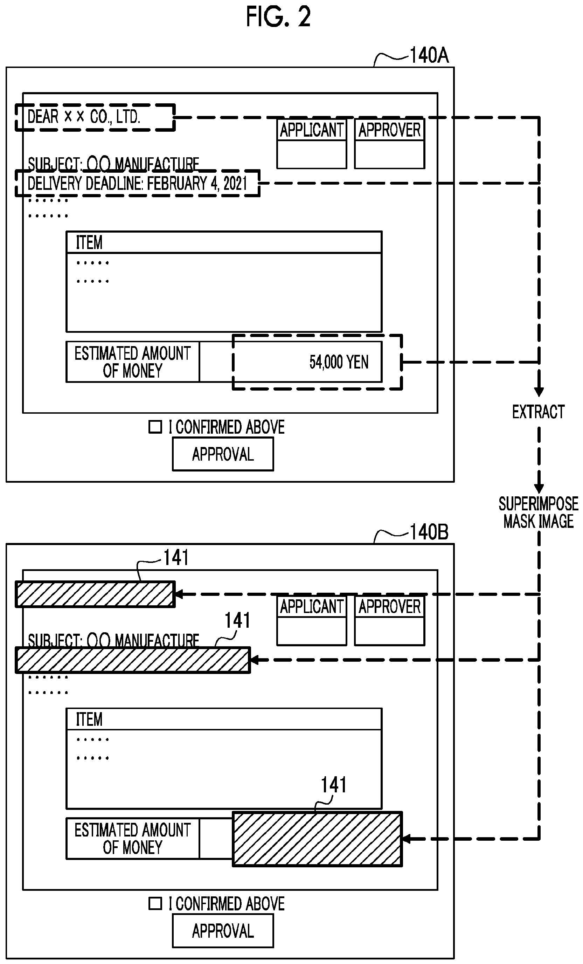

In this exemplary embodiment, a method of superimposing a mask image is used as a method of putting the text string of the item into an unrecognizable state. Fig. 2 is a schematic diagram of a mechanism for superimposing mask images of this exemplary embodiment. As shown in Fig. 2, text strings of the items that need to be confirmed in a form 140A are acquired, and a mask-processed form 140B on which mask images 141 are superimposed is generated. Then, in a case where the mask image 141 is clicked by a user operation on the processed form 140B, the mask image 141 is removed so that the contents of the hidden items can be confirmed. Hereinafter, the "form 140A" before processing and the "processed form 140B" will be distinguished, and the general form will be simply referred to as "form". In the case of a paper medium, the form is an image after scanning, and in the case of electronic data, the form is data such as PDF.

With the above mechanism, it is possible to make the approver of the form always confirm the information of the items that have to be confirmed and approve the information. Hereinafter, in the description of this exemplary embodiment, as a method of putting the text string of the item into an unrecognizable state, a method of superimposing the mask image 141 will be described as an example, but the method is not limited thereto, and a method capable of putting the text string into an unrecognizable state may be used as appropriate, such as mosaic, changing the font color or background color of the text string, and replacing the text string. Information about a text string such as a text string itself, a font color, a background color, and the like is an example of the "text string information" of the present disclosure. Further, removing the mask image 141 in a case where the mask image 141 is clicked by the user operation is an example of "changing the unrecognizable state to a recognizable state by performing a predetermined operation".

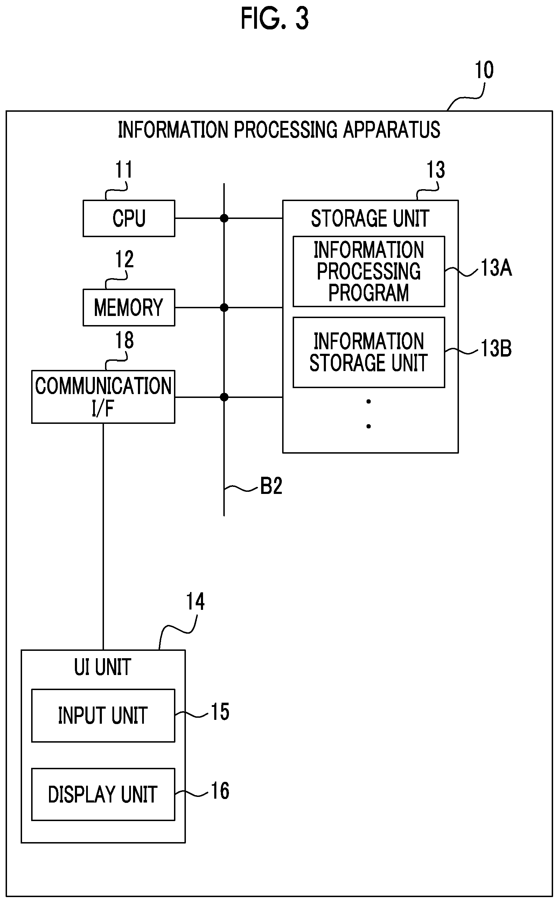

Fig. 3 is a block diagram showing a hardware configuration of an information processing apparatus 10 according to this exemplary embodiment. In this exemplary embodiment, as the information processing apparatus 10, various functions related to form approval support are applied. As shown in Fig. 3, the information processing apparatus 10 according to this exemplary embodiment includes a CPU 11, a memory 12 serving as a temporary storage area, a non-volatile storage unit 13, a user interface (UI) unit 14, and a communication interface (I/F) 18. The UI unit 14 includes an input unit 15 and a display unit 16. Each configuration is connected to each other via a bus B2. The information processing apparatus 10 may include a reading unit for reading a form on a paper medium.

The input unit 15 in the UI unit 14 includes a pointing device such as a mouse and a keyboard, and is used to receive various types of input information. The display unit 16 is, for example, a liquid crystal display and displays various types of information. The display unit 16 may employ a touch panel method and serve as the input unit 15. Hereinafter, the user's operation received by the input unit 15 is referred to as a user operation.

The communication I/F 18 is an interface for the information processing apparatus 10 to communicate with the UI unit 14. For the communication, for example, a wired communication standard such as Ethernet (registered trademark) or FDDI is used.

The storage unit 13 is realized by a storage device such as an HDD, an SSD, or a flash memory. An information processing program 13A is stored in the storage unit 13 serving as a storage medium. The CPU 11 reads the information processing program 13A from the storage unit 13, loads the information processing program 13A into the memory 12, and sequentially executes the processes included in the information processing program 13A. Further, the storage unit 13 stores various types of information that need to be stored, such as an information storage unit 13B.

The information storage unit 13B stores key value information and criteria for each item. The key value information is information indicating conditions for associating a key text string and a value text string, which are necessary for performing key value extraction to be described later. The criteria for each item are criteria for crucial items that need to be confirmed. In this exemplary embodiment, the mask image 141 is superimposed on a position of a text string of a target item with the item satisfying the criteria as the target item. Also, only crucial items without setting the criteria may be listed, and the mask image 141 may be superimposed on text strings of target items with the listed items as the target items.

In this exemplary embodiment, a key value extraction method based on the key value information is used to acquire the text string from the form. The key value extraction is to extract a value text string by specifying a key text string. The key text string is a text string representing an item. Items include, for example, "destination", "amount of money", and "approved delivery date". The value text string is a text string representing a value corresponding to an item. The text string representing the value is, for example, "54,000 yen" in a case where the item is a value of "amount of money". In the case of extracting the key value from the form, for example, in a case where "amount of money" is specified as the key text string, "54,000 yen" is extracted as the value text string in the form. Any method such as optical character recognition (OCR) can be used for key value extraction. The key text string, which is a text string representing an item, is an example of the "predetermined item" of the present disclosure, and the value text string, which is a text string representing a value, is an example of the "text string information" of the present disclosure. Further, as the key value information, the specification of the item which is a key text string may be received from the user.

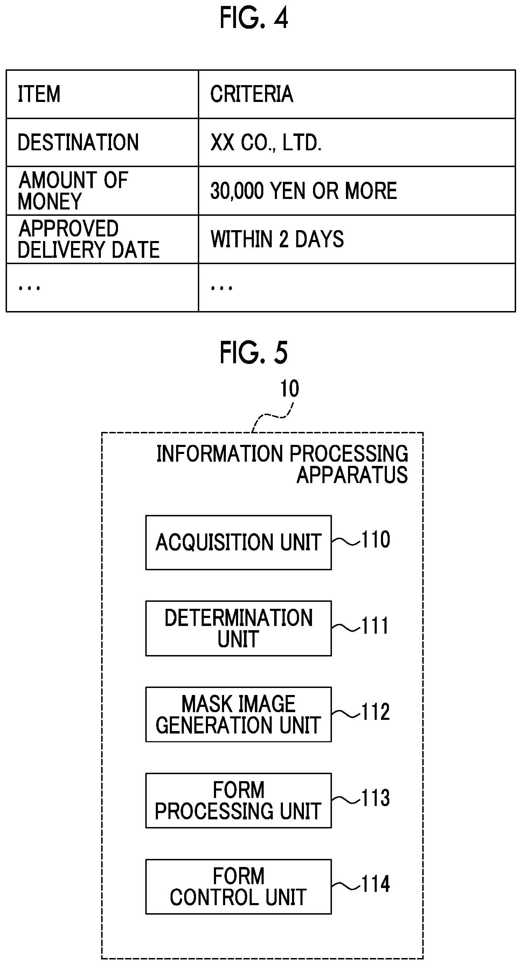

Fig. 4 is a diagram showing an example of criteria for each item of this exemplary embodiment. The information processing apparatus 10 changes the text string of the item satisfying the criteria to the unrecognizable state. In the example shown in Fig. 4, the criteria for each of the "destination" item, the "amount of money" item, and the "approved delivery date" item are shown. The first line indicates that in a case where the criterion of the "destination" item is "XX Co., Ltd." (XX is a company name), the item is a target item. In this way, it is possible to use as a criterion whether or not the text strings of the items match. The second line indicates that in a case where the criterion of the "amount of money" item is "30,000 yen or more", the item is a target item. In this way, it is possible to use as a criterion whether the value of a certain amount of money is equal to or more than the set amount of money (or less than or equal to the set amount of money) . The third line indicates that in a case where the criterion of the "approved delivery date" item is "within 2 days", the item is a target item. In this way, it is possible to use as a criterion whether the date is within (or equal to or more than) a predetermined number of days. As an example of determination of the criteria, in a case where the criterion is an approved delivery date, the current date is "2/3/2021", and the text string is "delivery deadline: 2/4/2021", it is determined that the criterion is satisfied because there is one day until the delivery date and it is within two days, and the item is set as a target item.

The above is the description of the hardware configuration of the information processing apparatus 10.

Fig. 5 is a block diagram showing an example of a functional configuration of the information processing apparatus 10 according to this exemplary embodiment. As shown in Fig. 5, the CPU 11 of the information processing apparatus 10 according to this exemplary embodiment serves as an acquisition unit 110, a determination unit 111, a mask image generation unit 112, a form processing unit 113, and a form control unit 114.

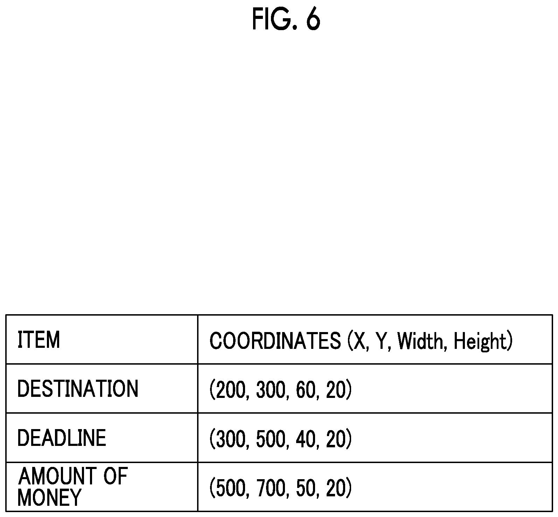

The acquisition unit 110 receives the digitized form 140A, and acquires a text string corresponding to a predetermined item in the form 140A and position information of the text string. The item is an item obtained by referring to the key value information stored in the information storage unit 13B. The text string is a text string corresponding to the item obtained by the key value extraction described above. The method of acquiring the position information will be described. Fig. 6 is a diagram showing an example of position information of this exemplary embodiment. As shown in Fig. 6, as the position information of the text string for each item, an X coordinate, a Y coordinate, a horizontal width (Width), and a vertical width (Height) in the form 140A are acquired. In the example of Fig. 6, the text string of "destination" indicates that the X coordinate is "200", the Y coordinate is "300", the horizontal width is "60", and the vertical width is "20". Note that each item is not limited to a unique case, and a plurality of text strings and position information may be acquired for one type of item. For example, for the "destination" item, a plurality of items such as "destination 1: XX Co., Ltd." and "destination 2: YY Co., Ltd." may be acquired. The text string and the position information may be acquired and received by an external device.

The determination unit 111 determines whether or not the item of the text string acquired by the acquisition unit 110 is a target item based on the criteria for each item stored in the information storage unit 13B.

The mask image generation unit 112 generates the mask image 141 for the target item based on the horizontal width of the position information and the vertical and horizontal size of the horizontal width. For example, in a case where the horizontal width of the vertical and horizontal size is "60" and the vertical width thereof is "20", the mask image 141 of the vertical and horizontal size is generated.

The form processing unit 113 superimposes the mask image 141 generated by the mask image generation unit 112 on the form 140A based on the X and Y coordinates of the position information for each target item, and outputs the processed form 140B. For example, in a case where the X coordinate is "200" and the Y coordinate is "300", the mask image 141 is superimposed on the coordinates.

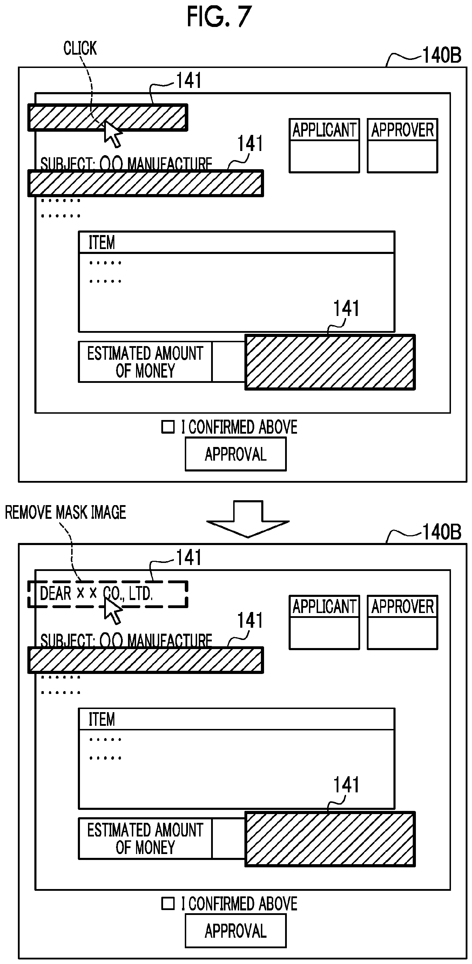

Further, the form control unit 114 receives a user operation on the processed form 140B and controls the display of the processed form 140B displayed on the display unit 16. As shown in Fig. 7, the form control unit 114 removes the mask image 141 of the processed form 140B in a case where the mask image 141 is clicked by a user operation. In a case where the mask image 141 is removed, the form control unit 114 displays, on the display unit 16, predetermined change information indicating that the target item has been changed from the unrecognizable state to the recognizable state. The form control unit 114 displays completion information on the display unit 16 in a case where the mask image 141 is removed for all the target items of the processed form 140B. The form control unit 114 performs control such that approval of the processed form 140B is prohibited in a case where the completion information is not displayed, and approval thereof is permitted in a case where the completion information is displayed. As the control related to approval, it is assumed that the approval button cannot be pressed unless the check box of "I confirmed the above" and the approval seal are stamped. Examples of the control for prohibiting approval include controlling so that the check box of the "I confirmed the above" shown in Fig. 7 cannot be checked, and controlling so that the approval button cannot be pressed. The specific display mode of the change information and the completion information will be described later.

Next, the operation of the information processing apparatus 10 will be described.

The process of the information processing apparatus 10 is substantially divided into a target item determination process, a form mask process, and a form control process. Each process is performed by the CPU 11 reading the information processing program 13A from the storage unit 13 and loading the program into the memory 12 for execution.

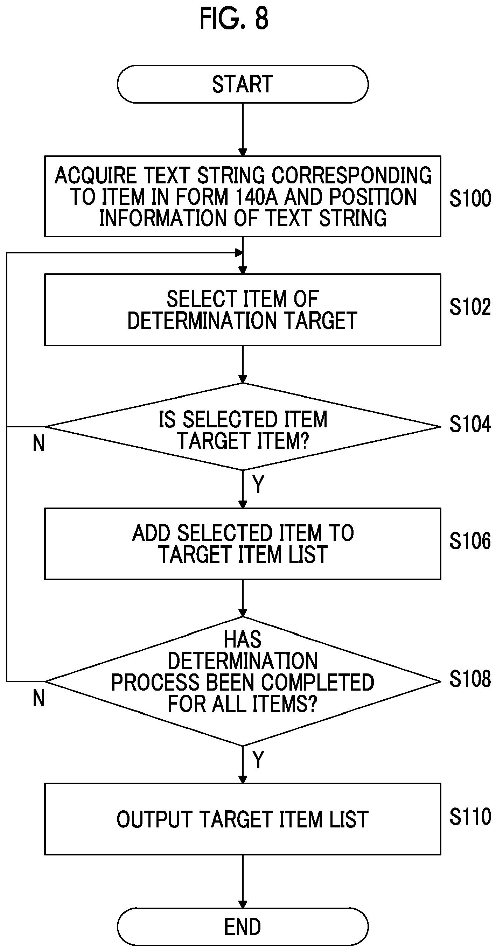

Fig. 8 is a flowchart showing a flow of a target item determination process by the information processing apparatus 10 according to this exemplary embodiment. The target item determination process is performed by receiving the form 140A.

In Step S100, the CPU 11 acquires a text string corresponding to a predetermined item in the form 140A and position information of the text string. The acquired text string and position information are stored in the information storage unit 13B.

In Step S102, the CPU 11 selects an item to be determined from the items for which the text string has been acquired.

In Step S104, the CPU 11 determines whether or not the selected item is a target item based on the criteria for each item stored in the information storage unit 13B. In a case where it is determined that the item is a target item, the process proceeds to Step S106, and in a case where it is determined that the item is not a target item, the process returns to Step S102, selects the next item, and repeats the process.

In Step S106, the CPU 11 adds the selected item as a target item to a target item list.

In Step S108, the CPU 11 determines whether or not a determination process has been completed for all the acquired items. In a case where it is determined that the determination process has been completed for all the items, the process proceeds to Step S110, and in a case where it is determined that the determination process has not been completed for all the items, the process returns to Step S102, selects the next item, and repeats the process.

In Step S110, the CPU 11 outputs a target item list and ends the target item determination process. The output here is the storage of the target item list in the information storage unit 13B. Further, in the output, the target item list may be displayed on the display unit 16.

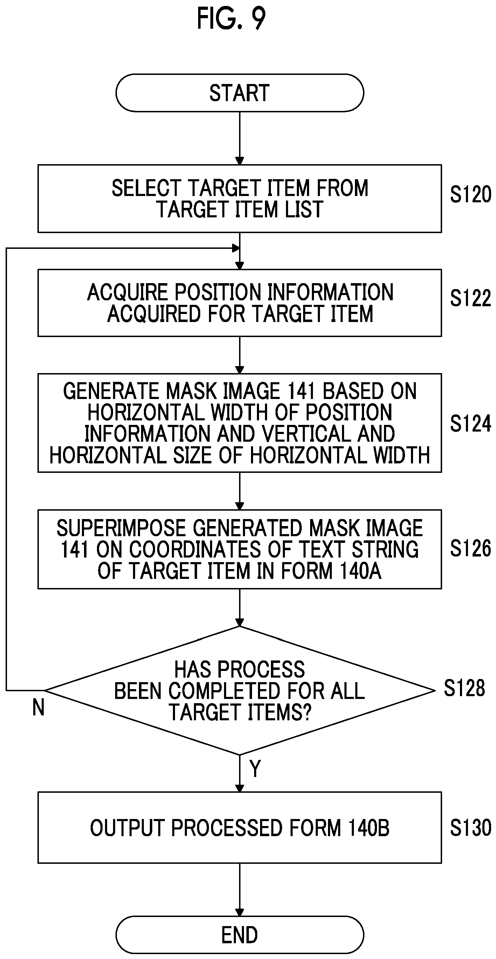

Fig. 9 is a flowchart showing a flow of a form mask process by the information processing apparatus 10 according to this exemplary embodiment. The form mask process is performed by acquiring the target item list obtained by the target item determination process.

In Step S120, the CPU 11 selects a target item from the target item list.

In Step S122, for the target item selected in Step S120, the CPU 11 acquires the position information acquired for the target item.

In Step S124, the CPU 11 generates a mask image 141 for the target item selected in Step S120 based on the horizontal width of the position information acquired in Step S122 and the vertical and horizontal size of the horizontal width.

In Step S126, for the target item selected in Step S120, the CPU 11 superimposes the mask image 141 generated in Step S124 on the coordinates of the text string of the target item in the form 140A based on the X and Y coordinates of the position information acquired in Step S122. The superimposition process may be performed by first generating an image obtained by copying the form 140A and superimposing the mask image 141 on the generated image.

In Step S128, the CPU 11 determines whether or not the process has been completed for all the target items. In a case where it is determined that the process has been completed for all the target items, the process proceeds to Step S130, and in a case where it is determined that the process has not been completed for all the target items, the process returns to Step S122, selects the next target item, and repeats the process.

In Step S130, the CPU 11 outputs the final processed form 140B and ends the form mask process. In the output, the processed form 140B is stored in the information storage unit 13B. Further, in the output, the processed form 140B may be displayed on the display unit 16.

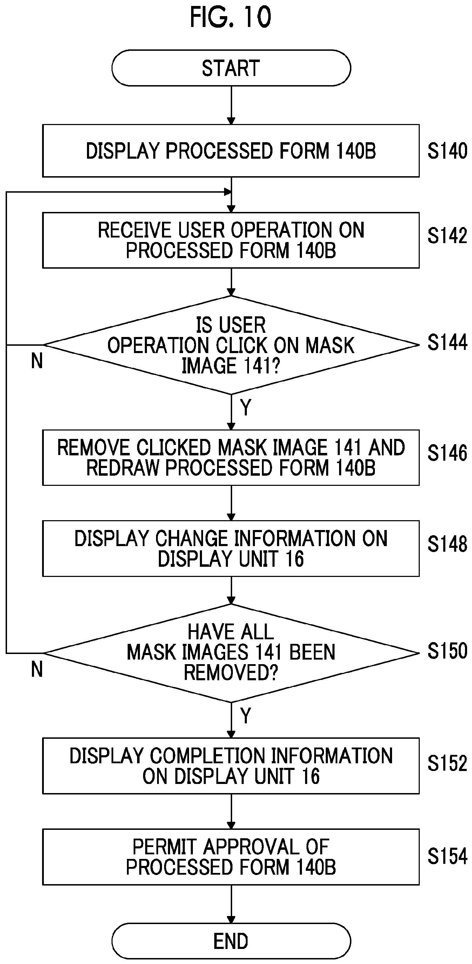

Fig. 10 is a flowchart showing a flow of a form control process by the information processing apparatus 10. The form control process is performed in a case where the processed form 140B is read in response to a user operation.

In Step S140, the CPU 11 causes the display unit 16 to display the processed form 140B.

In Step S142, the CPU 11 receives a user operation on the processed form 140B.

In Step S144, the CPU 11 determines whether or not the user operation is a click on the mask image 141.

In Step S146, the CPU 11 removes the mask image 141 clicked in Step S142 from the processed form 140B, and redraws the processed form 140B on the display unit 16. The redrawing may be performed by superimposing the remaining mask images 141 other than the clicked and removed mask image 141 on the copied image of the form 140A to generate the processed form 140B.

In Step S148, the CPU 11 displays change information on the display unit 16. The information storage unit 13B stores a log of items corresponding to the clicked mask image 141, and displays change information based on the log.

In Step S150, the CPU 11 determines whether or not all the mask images 141 of the processed form 140B have been removed. In a case where it is determined that all the mask images 141 have been removed, the process proceeds to Step S152, and in a case where it is determined that all the mask images 141 have not been removed, the process returns to Step S142, receives a user operation, and repeats the process.

In Step S152, the CPU 11 displays completion information on the display unit 16.

In Step S154, the CPU 11 performs control such that approval of the processed form 140B is permitted and ends the process. Since the form may be approved by a general approval process, the description thereof will be omitted.

The display mode of the change information in Step S148 will be described.

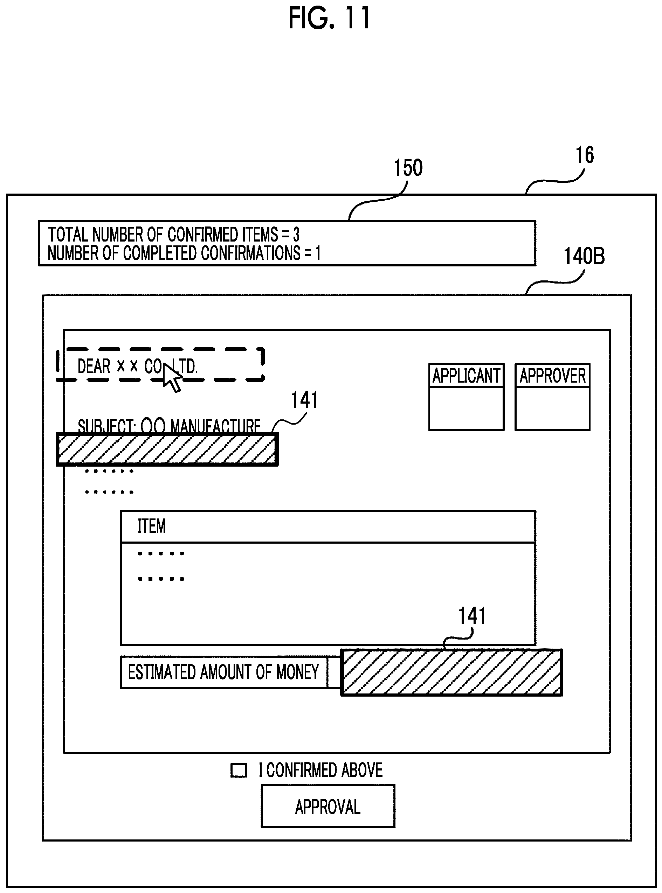

Fig. 11 is a diagram showing a display example in a case where the number of items is displayed as change information of this exemplary embodiment. In the example of Fig. 11, the display unit 16 displays an item number area 150 including the total number of confirmed items and the number of completed confirmations on the upper part of the processed form 140B. The CPU 11 counts up the number of completed confirmations every time the mask image 141 is clicked and removed by a user operation. The display position of the item number area 150 is an example, and the display position may be changed as appropriate for display. The total number of confirmed items is an example of the "number of items" of the present disclosure, and the number of completed confirmations is an example of the "number of items changed to the recognizable state".

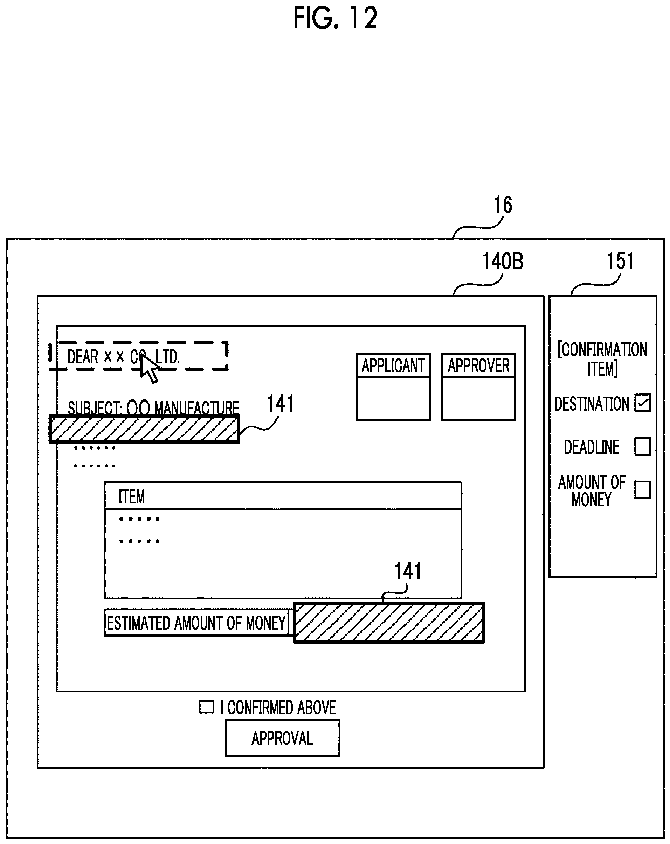

Fig. 12 is a diagram showing a display example in a case where a check box is displayed as change information of this exemplary embodiment. In the example of Fig. 12, a check box area 151 is displayed on the right side of the processed form 140B on the display unit 16. Every time the mask image 141 is clicked by the user operation, a check is automatically inserted in the check box of the item corresponding to the clicked mask image. The display position of the check box area 151 is an example, and the display position may be changed as appropriate for display. The check box area 151 is an example of the "confirmation status display section" of the present disclosure.

By displaying the above change information, the user can grasp the items to be confirmed.

The display mode of the completion information in Step S152 will be described.

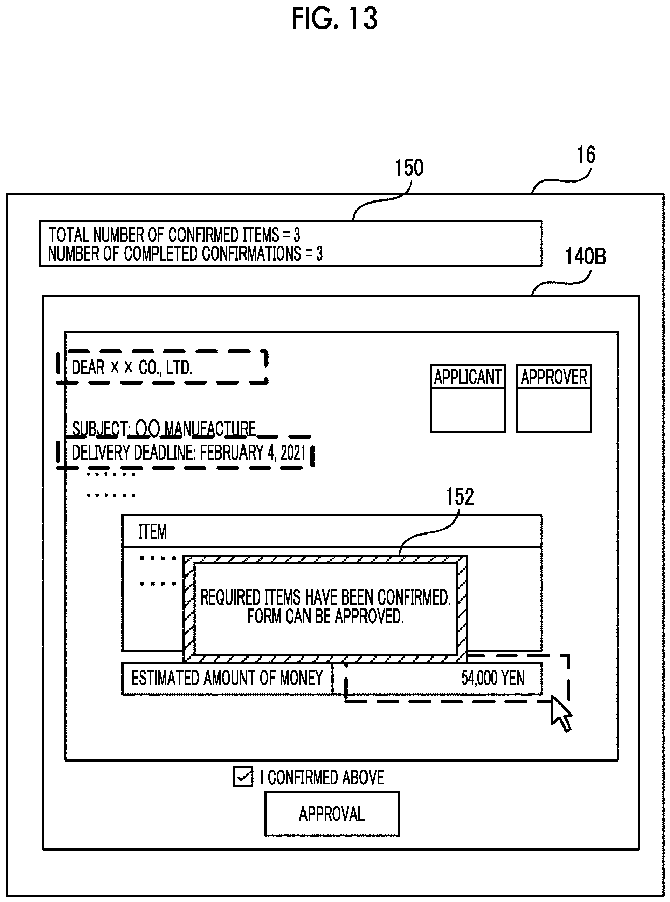

Fig. 13 is a diagram showing a display example in a case where completion information of this exemplary embodiment is displayed. As shown in Fig. 13, a message box 152 containing a message such as "Required items have been confirmed. The form can be approved." is displayed. Note that, displaying a message as a display of completion information is an example, and the completion information may be displayed depending on the display mode such as by displaying an icon for watching the approval button and changing the background color around the approval button. By displaying the completion information, the user can grasp that the form can be approved. In addition to displaying the completion information, the check box of the "I confirmed the above" may be automatically checked. Further, the approval seal may be automatically stamped. In this way, the user operation required for approval can be automated.

As described above, according to the information processing apparatus 10 of this exemplary embodiment, it is possible to recognize the presence of predetermined items in the form.

The present disclosure is not limited to the above-described exemplary embodiment, and various modifications and applications are possible without departing from the gist of the disclosure. For example, in a case where there are a plurality of acquired target items, it is assumed that the number of target items on which the mask image 141 is superimposed is expected to be suppressed. In this case, among the target items satisfying the criteria, the target item on which the mask image 141 is superimposed is determined in accordance with a predetermined rule. As an example, in a case where there are two or more destination items in the form, a rule is defined that the mask image 141 is generated and superimposed only on the first destination. In this way, by suppressing the number of target items on which the mask image 141 is superimposed, the confirmation work of the user can be simplified. Further, in a case where two items are displayed side by side at adjacent positions, a rule may be set so as to combine, generate, and superimpose the mask image 141 from the position information of the two items. By combining the mask images 141 for two or more adjacent display position items in this way, the user can confirm the items that need to be confirmed with just one click of the mask image 141, and the confirmation work can be simplified.

In addition, various processors other than the CPU may execute the information processing executed by the CPU reading the software (program) in the above exemplary embodiment. In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In addition, information processing may be executed by one of these various processors, or may be executed by a configuration of two or more processors of the same type or different types (for example, a combination of a plurality of FPGAs, a combination of a CPU and an FPGA, and the like) . Further, the hardware structure of these various processors is, more specifically, an electric circuit in which circuit elements such as semiconductor elements are combined.

Further, in the above exemplary embodiment, the mode in which the information processing program is stored (installed) in the ROM or the storage in advance has been described, but the present disclosure is not limited thereto. The program may be provided in a form recorded on a non-transitory recording medium such as a compact disk read only memory (CD-ROM), a digital versatile disk read only memory (DVD-ROM), and a universal serial bus (USB) memory. Further, the program may be downloaded from an external device via a network.

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 10:: information processing apparatus
- 11:: CPU
- 12:: memory
- 13:: storage unit
- 13A:: information processing program
- 13B:: information storage unit
- 14:: UI unit
- 15:: input unit
- 16:: display unit
- 110:: acquisition unit
- 111:: determination unit
- 112:: mask image generation unit
- 113:: form processing unit
- 114:: form control unit

## Claims

1. An information processing apparatus comprising:
a processor configured to:
acquire text string information corresponding to a predetermined item in a digitized form and position information of the text string information;
put the acquired text string information into an unrecognizable state in a display of the form by using the acquired position information for the item; and
change the unrecognizable state to a recognizable state by performing a predetermined operation on the item.

2. The information processing apparatus according to claim 1, wherein the processor is configured to:
display change information indicating whether or not the item has been changed from the unrecognizable state to the recognizable state.

3. The information processing apparatus according to claim 2, wherein the processor is configured to:
display, as the change information, the number of the items in the unrecognizable state and the number of the items changed to the recognizable state in a predetermined area.

4. The information processing apparatus according to claim 2, wherein the processor is configured to:
display, as the change information, a confirmation status display section for each item that changes in a case where the unrecognizable state is changed to the recognizable state in a predetermined area.

5. The information processing apparatus according to any one of claims 1 to 4, wherein the processor is configured to:
in a case where there are a plurality of the items in the unrecognizable state, display completion information for all of the items in a case where the unrecognizable state becomes the recognizable state due to the change.

6. The information processing apparatus according to claim 5, wherein the processor is configured to:
prohibit approval of the form in a case where the completion information is not displayed, and
permit approval of the form in a case where the completion information is displayed.

7. The information processing apparatus according to any one of claims 1 to 6, wherein the processor is configured to:
put the item into the unrecognizable state by superimposing a mask image, which is generated in a display range indicated by the acquired position information, on the form, and
change the unrecognizable state to the recognizable state by removing the mask image in response to an operation of selecting the mask image for the item in the unrecognizable state.

8. The information processing apparatus according to any one of claims 1 to 7, wherein the processor is configured to:
in a case where criteria set for each item are satisfied, acquire the text string information for the item and put the acquired text string information into the unrecognizable state.

9. The information processing apparatus according to claim 8, wherein the processor is configured to:
in a case where there are a plurality of the items for which the text string information has been acquired by satisfying the criteria, determine the item to be in the unrecognizable state among the items satisfying the criteria in accordance with a predetermined rule.

10. An information processing program causing a computer to execute a process comprising:
acquiring text string information corresponding to a predetermined item in a digitized form and position information of the text string information;
putting the acquired text string information into an unrecognizable state in a display of the form by using the acquired position information for the item; and
changing the unrecognizable state to a recognizable state by performing a predetermined operation on the item.

11. An information processing method comprising:
acquiring text string information corresponding to a predetermined item in a digitized form and position information of the text string information;
putting the acquired text string information into an unrecognizable state in a display of the form by using the acquired position information for the item; and
changing the unrecognizable state to a recognizable state by performing a predetermined operation on the item.
